# EUROPÄISCHE PATENTANMELDUNG

(11) **EP 4 067 213 A1**
(43) Veröffentlichungstag der Anmeldung: **05.10.2022**
(21) Anmeldenummer: 21166223.4
(22) Anmeldetag: 31.03.2021
(51) Int. Cl.: B62D 29/00, B62D 65/02

(54) **VERFAHREN ZUR AUTOMATISIERTEN ANBRINGUNG VON DÄMMELEMENTEN AN STRUKTURELEMENTEN**

(71) Anmelder: Sika Technology AG, 6340 Baar (CH)
(72) Erfinder: Lindgren, Henrik, 7181 Feluy (BE); Marcq, Dimitri, 1480 Tubize (BE)
(74) Vertreter: Sika Patent Attorneys

(57) **Zusammenfassung**

Ein Verfahren zur automatisierten Anbringung von Dämmelementen an Strukturelementen von Kraftfahrzeugen umfasst die folgenden Schritte: Bereitstellen mehrerer Dämmelemente, wobei ein Dämmelement jeweils einen Träger, ein expandierbares Material, welches auf dem Träger angeordnet ist, und zumindest ein Fixierungselement zur Fixierung des Dämmelementes am Strukturelement umfasst; Ergreifen einzelner Dämmelemente durch einen Roboter, wobei der Roboter als Mehrachsenroboter mit einem Greifer ausgebildet ist; und Anbringen jeweils eines Dämmelementes an einem Strukturelement durch den Roboter, wobei das zumindest eine Fixierungselement des Dämmelementes in eine Öffnung des Strukturelementes eingeführt wird.

## Beschreibung

Die Erfindung betrifft ein Verfahren zur automatisierten Anbringung von Dämmelementen an Strukturelementen von Kraftfahrzeugen, sowie Dämmelemente für ein solches Verfahren.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

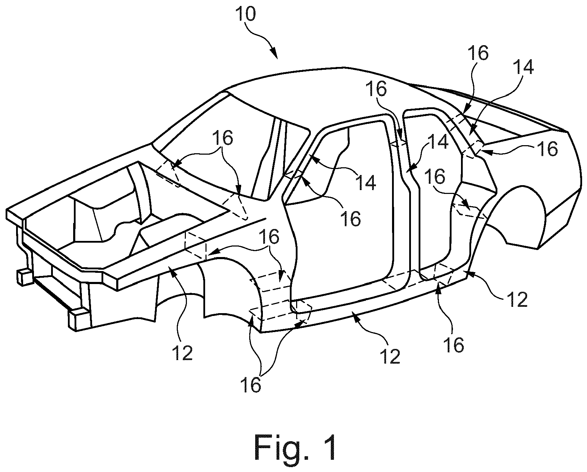

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Dämmelementen 16 abgedichtet bzw. verstärkt.

Üblicherweise werden solche Dämmelemente 16 von Hand an den Strukturelementen 12, 14 angebracht. Nachteilig an diesem bekannten manuellen Verfahren ist es jedoch, dass dadurch ein hoher Arbeitsaufwand benötigt wird, und dass diese manuelle Arbeit aus ergonomischer Sicht oftmals schlecht zu bewerkstelligen ist. Zudem besteht durch die manuelle Anbringung die Gefahr, dass Dämmelemente an nicht vorgesehenen Positionen angebracht werden, und auch dass falsche Dämmelemente an einer Position eines Strukturelementes angebracht werden.

Es ist daher eine Aufgabe der vorliegenden Erfindung, ein verbessertes Verfahren zur Anbringung von Dämmelementen an Strukturelementen in einem Kraftfahrzeug zur Verfügung zu stellen, welches die Nachteile des Standes der Technik vermeidet. Das Verfahren soll insbesondere eine verbesserte Wirtschaftlichkeit aufweisen, ergonomisch ungünstige Arbeitsplätze vermeiden, sowie eine Gefahr von Fehlinstallationen möglichst verhindern.

Diese Aufgabe wird zunächst gelöst durch ein Verfahren zur automatisierten Anbringung von Dämmelementen an Strukturelementen von Kraftfahrzeugen, das Verfahren umfassend die Schritte: Bereitstellen mehrerer Dämmelemente, wobei ein Dämmelement jeweils einen Träger, ein expandierbares Material, welches auf dem Träger angeordnet ist, und zumindest ein Fixierungselement zur Fixierung des Dämmelementes am Strukturelement umfasst; Ergreifen einzelner Dämmelemente durch einen Roboter, wobei der Roboter als Mehrachsenroboter mit einem Greifer ausgebildet ist; und Anbringen jeweils eines Dämmelementes an einem Strukturelement durch den Roboter, wobei das zumindest eine Fixierungselement des Dämmelementes in einer Öffnung des Strukturelementes eingeführt wird.

Diese Lösung hat zunächst den Vorteil, dass dadurch Dämmelemente durch ein automatisiertes Verfahren an Strukturelementen angebracht werden können. Dadurch können erhebliche Kosten eingespart werden, welche bei einer manuellen Applikation der Dämmelemente anfällt. Zudem können durch einen solchen automatisierten Vorgang auch Fehlmanipulationen ausgeschlossen werden, welche bei manuellen Applikationen hin und wieder vorkommen.

Das hier vorgeschlagene Verfahren bietet weiterhin den Vorteil, dass durch die automatisierte Anbringung der Dämmelemente die Dämmelemente selbst anders ausgelegt werden können. Insbesondere müssen die Dämmelemente bei einer manuellen Applikation so ausgelegt werden, dass das Anbringen von Hand einfach möglich ist. Dies bedingt beispielsweise eine spezielle Anpassung von Fixierungselementen, so dass ein Kraftaufwand für das Anbringen der Dämmelemente an Strukturelementen aus ergonomischen Gründen einen gewissen Wert nicht überschreitet. Durch das hier vorgeschlagene Automatisieren dieses Anbringungsvorganges können nun die Dämmelemente und insbesondere die Fixierungselemente der Dämmelemente neu ausgelegt werden. Insbesondere können die Fixierungselemente so ausgelegt werden, dass auch ein höherer Krafteinsatz Anwendung finden kann. Dies erlaubt es beispielsweise, günstigere oder auch robustere Materialien für das Fixierungselement zu verwenden.
Weiterhin müssen den Dämmelementen für die manuelle Anbringung oftmals spezielle Merkmale aufweisen, damit eine falsch orientierte Ausrichtung am Strukturelement beim Anbringen verunmöglicht wird. Dies kann beispielsweise durch ein Poka Yoke Design der Fixierungselemente erreicht werden, was jedoch die Kosten für solche Dämmelemente erhöht. Durch das hier vorgeschlagene automatisierte Anbringungsverfahren können solche speziellen Merkmale vermieden werden, sodass in der Folge günstigere Dämmelemente verwendet werden können.

Die Bezeichnung "Dämmelement" umfasst im Zusammenhang mit dieser Erfindung Elemente zur Abschottung und/oder Abdämmung und/oder Dämpfung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

Die Bezeichnung "Oberseite" und "Unterseite" bedeutet im Zusammenhang mit dieser Erfindung jeweils die beiden Hauptoberflächen bzw. die beiden grössten Flächen des Dämmelementes. Da die Dämmelemente dazu ausgelegt sind, einen Querschnitt in einem Strukturelement zu verschliessen, bedeutet dies, dass die Oberseite und die Unterseite sich jeweils im Wesentlichen in einer Ebene eines abzudämmenden Querschnitts befinden in einem Anwendungszustand. Dabei kann die Oberseite bzw. die Unterseite auch einen stufenförmigen Charakter haben, das heisst, die Oberseite bzw. die Unterseite muss nicht vollständig flach ausgebildet sein.

In einer beispielhaften Ausführungsform werden die Dämmelemente beim Bereitstellen in einem Stapel bereitgestellt, wobei alle übereinandergestapelten Dämmelemente im Wesentlichen gleich im Raum ausgerichtet sind.

Das Bereitstellen der Dämmelemente in Form von Stapeln hat insbesondere den Vorteil, dass dadurch eine Position der Fixierungselemente vordefiniert ist. Somit kann der Roboter Dämmelemente auf vordefinierte Art und Weise abgreifen, ohne dass dabei eine korrekte Ausrichtung der Dämmelemente durch zusätzliche Arbeitsschritte sichergestellt werden muss.

Dabei können solche Dämmelemente bereits für den Transport aufeinandergestapelt werden, sodass sie im gestapelten Zustand verpackt und transportiert werden. Dies bringt einerseits Ersparnisse bei den Transportkosten, weil dadurch die Dämmelemente platzsparender verpackt werden können, so dass in einem bestimmten Volumen mehr Dämmelemente transportiert werden können, als dies mit herkömmlichen Dämmelementen der Fall war.

Zudem bietet eine Stapelung solcher Dämmelemente den Vorteil, dass Verwechslungen von unterschiedlichen Dämmelementen einfacher erkannt werden können. Wenn beispielsweise ein erstes Dämmelement in einem Behälter mit mehreren zweiten Dämmelementen verpackt wird, fällt dies sofort auf, weil das erste Dämmelement in aller Regel nicht mit den zweiten Dämmelementen stapelbar ist. Dadurch können Verwechslungen stark reduziert werden.

Weiterhin können durch die gestapelte Anordnung für Transport und Lagerung die einzelnen Dämmelemente weniger leicht beschädigt werden. Werden nämlich wie bisher die einzelnen Dämmelemente lose in einem Behälter transportiert, so kommt es zu vielen Kontakten zwischen den Dämmelementen, wobei ab und zu eine Beschädigung auftreten kann. Werden jedoch die Dämmelemente in Stapeln transportiert, so wird eine Anzahl an mechanischen Berührungen der Dämmelemente untereinander stark reduziert. Zudem können die Dämmelemente derart ausgestaltet werden, dass die vorgesehenen Berührungsorte robust bzw. wenig anfällig auf Beschädigung ausgebildet sind, und/oder dass leichter zu beschädigende Orte der Dämmelemente an geschützten Stellen angeordnet sind, welche beispielsweise bei einer Stapelung durch die benachbarten Dämmelemente abgedeckt sind.

Durch das Bereitstellen von Dämmelementen in gestapelter Form kann insbesondere das gesamte System geladen und vorbereitet werden, so dass es für längere Zeit autonom arbeiten kann. Da in der Regel pro Kraftfahrzeug viele solcher Dämmelemente verbaut werden, bedeutet dies eine grosse Einsparung an menschlichem Arbeitseinsatz.

Das Stapeln bietet weiterhin insbesondere den Vorteil, dass eine Automation wesentlich effizienter und kostengünstiger ausgestaltet werden kann. Beispielsweise kann der Roboter weniger komplex ausgebildet sein, als wenn ein Roboter Dämmelemente in einem ungeordneten Zustand greifen muss. Durch die Bereitstellung in Stapeln kann dadurch der Greifvorgang der Dämmelemente durch den Roboter vereinfacht und effizienter gemacht werden.

In einer beispielhaften Ausführungsform hat das Dämmelement eine Oberseite und eine Unterseite, welche in einem Verwendungszustand im Wesentlichen in einer Ebene eines abzudämmenden Querschnittes des Strukturelementes ausgerichtet sind.

In einer beispielhaften Ausführungsform weist das Dämmelement auf der Oberseite und auf der Unterseite jeweils zumindest eine oder zumindest zwei oder zumindest drei Kontaktstellen auf, wobei diese Kontaktstellen derart ausgebildet sind, dass bei einer Stapelung mehrerer identischer Dämmelemente jeweils benachbarte Dämmelemente über diese Kontaktstellen aufeinander aufliegen und dadurch parallel zueinander angeordnet sind.

In einer beispielhaften Ausführungsform hat das Dämmelement auf der Oberseite und auf der Unterseite jeweils mindestens eine oder mehrere Kontaktstellen, welche bei einer Stapelung von benachbarten Dämmelementen aufeinander aufliegen.

Das Dämmelement hat eine Stapelhöhe, welche einer zusätzlichen Höhe in Stapelrichtung eines Stapels mit Dämmelementen entspricht, um welche der Stapel wächst, wenn ein weiteres Dämmelement auf den Stapel gestapelt wird.

In einer beispielhaften Ausführungsform beträgt eine Stapelhöhe des Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Dies hat den Vorteil, dass dadurch die Dämmelemente platzsparender in einem Stapel angeordnet werden können. Durch eine stärkere vertikale Verschachtelung benachbarter Dämmelemente in einem Stapel wird zudem eine verbesserte Stabilität eines Gesamtstapels erreicht.

In einer beispielhaften Ausführungsform umfasst ein Stapel zumindest zehn oder zumindest fünfzehn oder zumindest zwanzig oder zumindest fünfundzwanzig oder zumindest dreissig gestapelte Dämmelemente.

In einer weiteren beispielhaften Ausführungsform umfasst ein Stapel höchstens 150 oder höchstens 120 oder höchstens 100 oder höchstens 80 oder höchstens 60 gestapelte Dämmelemente.

In einer beispielhaften Ausführungsform liegt ein unterstes Dämmelement des Stapels auf einem Grundelement auf.

Das Vorsehen eines solchen Grundelementes hat zunächst den Vorteil, dass dadurch ein Stapel von Dämmelementen auf eine Fläche gestellt werden kann, insbesondere ohne dass dabei der Stapel umkippt.

In einer beispielhaften Weiterbildung ist das Grundelement derart ausgebildet, dass der Stapel darauf so angeordnet ist, dass die Stapelrichtung im Wesentlichen vertikal verläuft.

In einer beispielhaften Ausführungsform ist das Grundelement reliefartig ausgebildet, wobei jeweils für einen Stapel eine entsprechend geformte Vertiefung auf einer Oberfläche des Grundelementes ausgebildet ist.
Solche Grundelemente können jedoch auch anders ausgebildet sein, beispielsweise kann eine flächige Grundplatte vorgesehen werden, auf welcher verschiedene Stützelemente wie Säulen, Erhebungen oder Ähnliches vorgesehen sind, welche die Stapel an vordefinierter Stelle positionieren, ausrichten und stützen.

Das Vorsehen von solchen vorgeformten Grundelementen hat den Vorteil, dass dadurch einerseits eine Stützung beziehungsweise eine Ausrichtung des Stapels verbessert werden kann, und dass dadurch andererseits auch eine Positionierung des Stapels auf dem Grundelement vordefiniert werden kann.

Für automatisierte Prozesse ist es oftmals wichtig, dass räumliche Positionen von Elementen, welche durch Roboter manipuliert werden, genau definiert sind. Durch eine geeignete Auswahl von solchen Ausformungen kann eine solche vordefinierte Positionierung der Stapel auf den Grundelementen erreicht werden.

In einer beispielhaften Weiterbildung umfasst das Grundelement mehrere Ausformungen zur Positionierung der Dämmelemente.

In einer beispielhaften Weiterbildung ist eine erste Ausformung zur Aufnahme eines Stapels eines ersten Dämmelementtypus ausgebildet, und zumindest eine weitere Ausformung auf demselben Grundelement ist zur Aufnahme eines Stapels desselben Dämmelementtypus ausgebildet.

In einer alternativen Weiterbildung umfasst das Grundelement wiederum mehrere Ausformungen, wobei eine erste Ausformung zur Aufnahme eines Stapels eines ersten Dämmelementtypus ausgebildet ist, und wobei zumindest eine weitere Ausformung auf demselben Grundelement zur Aufnahme eines Stapels eines anderen Dämmelementtypus ausgebildet ist.

Dadurch lassen sich demnach mehrere Stapel entweder desselben Typus von Dämmelementen oder unterschiedlicher Typen von Dämmelementen auf demselben Grundelement vordefiniert anordnen.

In einer beispielhaften Ausführungsform ist das Grundelement als Tray oder als Blister ausgebildet.

In einer beispielhaften Ausführungsform bewegt der Roboter beim Einführen des Fixierungselementes in die Öffnung das Dämmelement in nur einer Applikationsrichtung. In einer beispielhaften Weiterbildung bewegt der Roboter das Dämmelement dabei im Wesentlichen senkrecht zu einer Oberfläche des Strukturelementes in einem Bereich der Öffnung.

In einer alternativen Weiterbildung bewegt der Roboter das Dämmelement dabei in einer Richtung, welche geneigt ist zu einer Senkrechten zu einer Oberfläche des Strukturelementes in einem Bereich der Öffnung.

In einer weiteren alternativen Weiterbildung bewegt der Roboter das Dämmelement dabei in einer bogen- oder kreisförmigen Art.

In einer alternativen beispielhaften Ausführungsform bewegt der Roboter beim Einführen des Fixierungselementes in die Öffnung das Dämmelement in zumindest zwei Applikationsrichtungen.

In einer beispielhaften Weiterbildung bewegt der Roboter das Dämmelement dabei in einer ersten Richtung, welche geneigt ist zu einer Senkrechten zu einer Oberfläche des Strukturelementes in einem Bereich der Öffnung, und zusätzlich in einer zweiten Richtung, welche ebenfalls geneigt ist zu einer Senkrechten zu einer Oberfläche des Strukturelementes in einem Bereich der Öffnung.
Vorzugsweise sind die erste Richtung und die zweite Richtung auf unterschiedliche Seiten der Senkrechten geneigt, insbesondere auf sich gegenüberliegende Seiten.

In einer weiteren beispielhaften Weiterbildung bewegt der Roboter das Dämmelement dabei in einer hin- und her wiegenden Bewegung.

In einer weiteren beispielhaften Weiterbildung bewegt der Roboter das Dämmelement dabei in einer um die Senkrechte herum kreisenden Bewegung.

In einer beispielhaften Ausführungsform umfasst das Verfahren den weiteren Schritt: Prüfen einer korrekten Anbringung des Dämmelementes am Strukturelement.

In einer beispielhaften Weiterbildung wird die Anbringung geprüft, indem ein Sensor, welcher vorzugsweise im Bereich des Greifers am Roboter angeordnet ist, zur Prüfung verwendet wird.

Der Sensor kann dabei beispielsweise als optischer Sensor ausgebildet sein.

In einer alternativen beispielhaften Weiterbildung wird die Anbringung geprüft, indem der Roboter das Dämmelement in zumindest einer Prüfrichtung, welche um zumindest 45° abgeneigt ist von einer Applikationsrichtung, belastet.

In einer beispielhaften alternativen Ausführungsform wird eine korrekte Anbringung des Dämmelementes am Strukturelement überprüft, indem der Roboter das Dämmelement in zumindest einer Prüfrichtung, welche im Wesentlichen einer Rotationsrichtung des Dämmelementes entspricht, belastet.

In einer beispielhaften Weiterbildung belastet der Roboter das Dämmelement beim Prüfen in zumindest zwei unterschiedliche zwei Prüfrichtungen.

Das oben beschriebene Belasten der Dämmelemente zur Überprüfung einer korrekten Anbringung des Dämmelementes am Strukturelement hat den Vorteil, dass dadurch mit einem einfachen Prozessschritt eine korrekte Anbringung sichergestellt werden kann. Insbesondere durch eine Überprüfung, bei welcher in zumindest zwei unterschiedliche Prüfrichtungen belastet wird, kann eine korrekte Fixierung des Dämmelementes sichergestellt werden.

In einer beispielhaften Ausführungsform wird beim Prüfen eine Kraft von zumindest 5 N, bevorzugt von zumindest 10 N, bevorzugt von zumindest 30 N, besonders bevorzugt von zumindest 50 N auf das angebrachte Dämmelement beaufschlagt.

In einer beispielhaften Ausführungsform wird beim Prüfen eine Kraft von höchstens 200 N, bevorzugt von höchstens 180 N, bevorzugt von höchstens 160 N, besonders bevorzugt von höchstens 140 N durch den Roboter auf das angebrachte Dämmelement beaufschlagt.

In einer beispielhaften Ausführungsform umfasst das Verfahren den weiteren Schritt: Aussortieren des Dämmelementes, falls das Dämmelement beim Prüfen vom Strukturelement abgelöst wird.

In einer beispielhaften Weiterbildung umfasst das Verfahren den weiteren Schritt: Unterbrechen des automatisierten Vorgangs, falls drei oder mehr Dämmelemente aus zehn nacheinander angebrachten Dämmelementen jeweils beim Prüfen vom Strukturelement abgelöst werden.

Solche und ähnliche Massnahmen haben den Vorteil, dass dadurch eine Fehleinstellung des Systems und/oder defekte Teile frühzeitig erkannt und behoben werden können.

In einer beispielhaften Ausführungsform beaufschlagt der Roboter beim Anbringen das Fixierungselement mit einer Kraft von zumindest 70 N, bevorzugt von zumindest 80 N, bevorzugt von zumindest 90 N, besonders bevorzugt von zumindest 100 N.

Die Beaufschlagung des Fixierungselementes mit solchen Kräften durch den Roboter hat den Vorteil, dass dadurch die Fixierungselemente selbst anders als im bekannten Stand der Technik ausgelegt werden können. Beispielsweise können andere Materialien für das Fixierungselement verwendet werden, oder aber das Fixierungselement kann eine andere Formgebung aufweisen, welche einen höheren Krafteinsatz für die Anbringung erfordert. Dadurch können die Fixierungselemente insgesamt robuster ausgebildet werden, so dass Beschädigungen der Fixierungselemente bei Herstellung und Transport der Dämmelemente weitgehend vermieden werden können.

In einer beispielhaften Ausführungsform umfasst das Verfahren den weiteren Schritt: Beschichten des Strukturelementes, nachdem das Dämmelement am Strukturelement angebracht ist, und bevor das expandierbare Material expandiert.

In einer beispielhaften Ausführungsform umfasst das Verfahren den weiteren Schritt: Expandieren des expandierbaren Materiales, wobei das expandierte Material das Dämmelement im Strukturelement dauerhaft befestigt, sodass das Fixierungselement nur für eine temporäre Vorfixierung des Dämmelementes im Strukturelement verwendet wird.

In einer beispielhaften Weiterbildung wird eine Expansion des expandierbaren Materiales durch eine Temperatur von zumindest 120° C ausgelöst.

Die eingangs genannte Aufgabe wird zudem gelöst durch ein Dämmelement zur Abdämmung eines Strukturelementes in einem Kraftfahrzeug, das Dämmelement umfassend: einen Träger; ein expandierbares Material, welches auf dem Träger angeordnet ist; und zumindest ein Fixierungselement zur Fixierung des Dämmelementes am Strukturelement; wobei das Dämmelement für eine automatisierte Anbringung nach obiger Beschreibung ausgelegt ist.

In einer beispielhaften Ausführungsform weist das Fixierungselement ein Führungselement auf, welches als Fortsatz an einem Ende des Fixierungselementes in einer vorgesehenen Applikationsrichtung ausgebildet ist.

Das Vorsehen solcher Führungselemente bietet den Vorteil, dass dadurch das Einführen des Fixierungselementes in eine Öffnung des Strukturelementes vereinfacht wird. Durch die Verwendung eines geeigneten Führungselementes kann die Öffnung mit grösseren Toleranzen durch den Roboter angesteuert werden. Das Führungselement führt dabei das Dämmelement an die vorgesehene Position während des Anbringungsvorgangs.

In einer beispielhaften Ausführungsform ist das Führungselement als Zylinder, als Kegel, pyramidenförmig oder als Stumpfkegel ausgebildet.

In einer beispielhaften Ausführungsform weist das Führungselement eine Höhe in Applikationsrichtung zwischen 0,5 und 5 mm, bevorzugt zwischen 1 und 4 mm, auf.

In einer beispielhaften Ausführungsform umfasst das Dämmelement zumindest zwei Fixierungselemente, wobei zumindest eines dieser Fixierungselemente Befestigungsclip mit Schnappverschluss ausgebildet ist.

In einer beispielhaften Ausführungsform ist ein Fixierungselement des Dämmelementes als einstufiger Schnappverschluss, oder aber als zweistufiger Schnappverschluss ausgebildet.

In einer beispielhaften Ausführungsform beträgt eine Höhe des Fixierungselementes in Applikationsrichtung, welche sich in einem angebrachten Zustand über das Strukturelement erhöht, höchstens 5 mm.

Das Vorsehen von solchen kurzen Fixierungselementen bietet den Vorteil, dass dadurch wenig Platz durch das Fixierungselement auf einer Rückseite des Strukturelementes beansprucht wird. In Karosserien sind die Platzverhältnisse oftmals stark eingeschränkt, so dass geringe Aufbauhöhen von solchen Elementen oftmals wünschenswert sind. Solche kurzen Aufbauhöhen sind jedoch häufig mit einem höheren Kraftaufwand für die Anbringung verbunden. Durch die hier vorgeschlagene Automatisierung der Anbringung durch einen Roboter können nun jedoch solche kurz aufbauende Fixierungselemente realisiert werden, da bei der Anbringung durch den Roboter eine höhere Kraftanwendung möglich geworden ist weil ergonomische Aspekte (wie bei der manuellen Applikation) keine Rolle mehr spielen. In einer beispielhaften Ausführungsform ist das Fixierungselement asymmetrisch ausgebildet, wobei eine erste Hälfte des Fixierungselementes in Applikationsrichtung um einen Höhenunterschied von zumindest 1 mm, bevorzugt von zumindest 2 mm, besonders bevorzugt von zumindest 3 mm, höher ausgebildet ist als eine zweite Hälfte des Fixierungselementes.

Ein solch asymmetrisch ausgestaltetes Fixierungselement hat den Vorteil, dass dadurch ähnlich dem Vorsehen von Führungselementen eine Einführhilfe gewährleistet werden kann, welche den automatischen Anbringungsvorgang weniger anfällig für Fehlmanipulationen macht.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-VinylAcetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%. Expandierbare Materialien mit solchen Expansionsraten bieten den Vorteil, dass dadurch eine zuverlässige Abdichtung bzw. Abdämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum abzudämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

In einer beispielhaften Ausführungsform umfasst der Roboter einen mehrgelenkigen Roboterarm und nur einen daran angeordneten Greifer.

In einer beispielhaften Weiterbildung umfasst der Roboter mehrere Greifer. Dabei ist der Roboter derart ausgebildet, dass er jeweils mit jedem Greifer ein einzelnes Dämmelement vom Stapel entnehmen und an Strukturelementen anordnen kann.

Dabei kann der Greifer auf verschiedene Arten ausgeformt sein.

Beispielsweise kann der Greifer einen Sauggreifer und/oder einen Parallelgreifer und/oder einen Expansionsgreifer umfassen.

In einer beispielhaften Ausführungsform ist der Greifer dazu ausgebildet, mehrere unterschiedliche Typen von Dämmelementen zu greifen.

In einer beispielhaften Ausführungsform hat der Greifer zumindest zwei Eingriffselemente, welche derart ausgestaltet sind, dass sie in entsprechende Eingriffselemente an den Dämmelementen gefügt werden können.

Diese Eingriffselemente an den Dämmelementen und am Greifer des Roboters können auf unterschiedliche Art und Weise ausgestaltet werden.
Beispielsweise können die Eingriffselemente am Dämmelement in Form von Hauben oder Vertiefungen vorliegen, und die entsprechenden Eingriffselemente am Greifer können komplementär dazu ausgebildet sein.
Oder aber die Eingriffselemente am Greifer können als Löcher oder Langlöcher mit beispielsweise unterschiedlicher Grösse ausgebildet sein, und die Eingriffselemente am Dämmelement können beispielsweise eine kegelförmige Ausbildung aufweisen. Die Eingriffselemente an den Dämmelementen können weiterhin beispielsweise als Stufen, Ränder oder Rippen ausgebildet sein.

In einer beispielhaften Weiterbildung sind diese zumindest zwei Eingriffselemente des Greifers unterschiedlich ausgeformt.

Eine unterschiedliche Ausformung der Eingriffselemente hat den Vorteil, dass dadurch eine Ausrichtung der Dämmelemente am Greifer eindeutig festgelegt werden kann, so dass die Dämmelemente nicht um 180° verkehrt gegriffen werden können. Dadurch können Fehlmanipulationen durch den Roboter vermieden werden.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 2c: eine schematische Darstellung eines beispielhaften Dämmelementes beziehungsweise eines Stapels mit mehreren solchen Dämmelementen;
- Fig. 3: eine schematische Darstellung eines Systems zur Durchführung eines automatisierten Anbringungsverfahrens;
- Fig. 4: eine schematische Darstellung eines beispielhaften Greifers mit daran angeordnetem Dämmelement;
- Fig. 5a bis 5c: schematische Darstellungen von beispielhaften Fixierungselementen;
- Fig. 6a und 6b: eine schematische Darstellung eines beispielhaften automatisierten Anbringungsvorgangs; und
- Fig. 7a bis 7c: eine schematische Darstellung eines beispielhaften automatisierten Anbringungsvorganges.

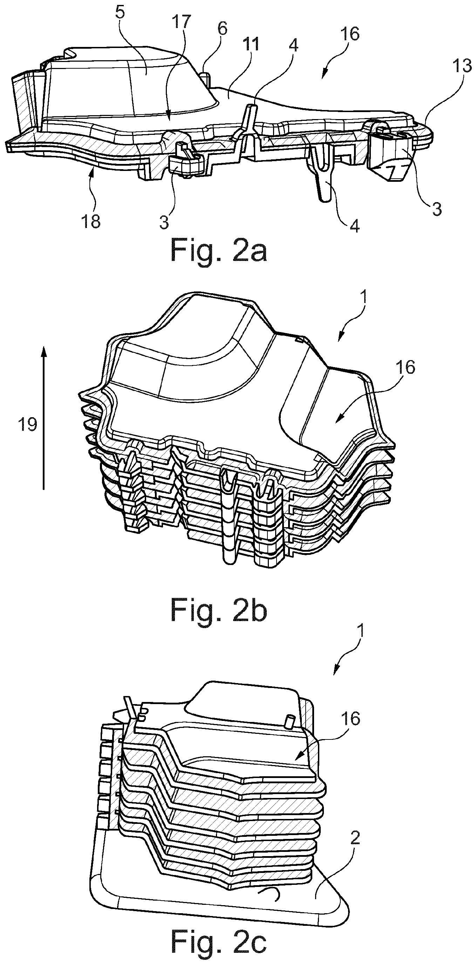

In Fig. 2a ist zunächst ein einzelnes Dämmelement 16 dargestellt. Dieses Dämmelement 16 hat einen Träger 11 und ein auf diesem Träger 11 angeordnetes expandierbares Material 13. Das Dämmelement 16 ist im Wesentlichen flächenförmig ausgebildet, um in einem Verwendungszustand einen Querschnitt eines Strukturelementes effizient abdämmen zu können. Dabei ist das Dämmelement 16 jedoch nicht vollständig flach ausgebildet, sondern es hat verschiedene Erhebungen und stufenförmige Absätze, insbesondere eine steile Stufe 5.

Das Dämmelement 16 hat dabei eine Oberseite 17 und eine Unterseite 18. Zudem hat das Dämmelement 16 in diesem Ausführungsbeispiel zwei Fixierungselemente 3, sowie zwei Distanzelemente 4, welche jeweils auf unterschiedliche Seiten ausgerichtet sind.

Zudem hat das Dämmelement 16 ein Auflageelement 6, welches in diesem Ausführungsbeispiel auf der Oberseite 17 des Dämmelementes 16 angeordnet ist.

In diesem Ausführungsbeispiel hat das Dämmelement 16 drei Kontaktstellen, welche auf der Oberseite 17 angeordnet sind, und jeweils drei dazu zugeordnete Kontaktstellen auf der Unterseite 18. Dabei sind jeweils zwei Kontaktstellen in den Bereichen der Fixierungselemente 3 angeordnet, und eine weitere Kontaktstelle ist als Auflageelement 6 bzw. als Auflagepunkt auf der Unterseite 18 des Dämmelementes 16 ausgebildet.

In Fig. 2b ist nun ein Stapel 1 mit mehreren Dämmelementen 16 gemäss Fig. 2a dargestellt. Die Dämmelemente 16 sind dabei in einer Stapelrichtung 19 aufeinandergestapelt. Dabei sind die gestapelten Dämmelemente 16 parallel zueinander angeordnet und liegen jeweils auf den Kontaktstellen auf deren Oberseite und Unterseite aufeinander auf. Die Dämmelemente 16 sind im Wesentlichen gleich im Raum ausgerichtet.

In Fig. 2c ist wiederum ein Stapel 1 mit gestapelten Dämmelementen 16 dargestellt, wobei in diesem Ausführungsbeispiel das unterste Dämmelement 16 des Stapels 1 auf einem Grundelement 2 angeordnet ist.

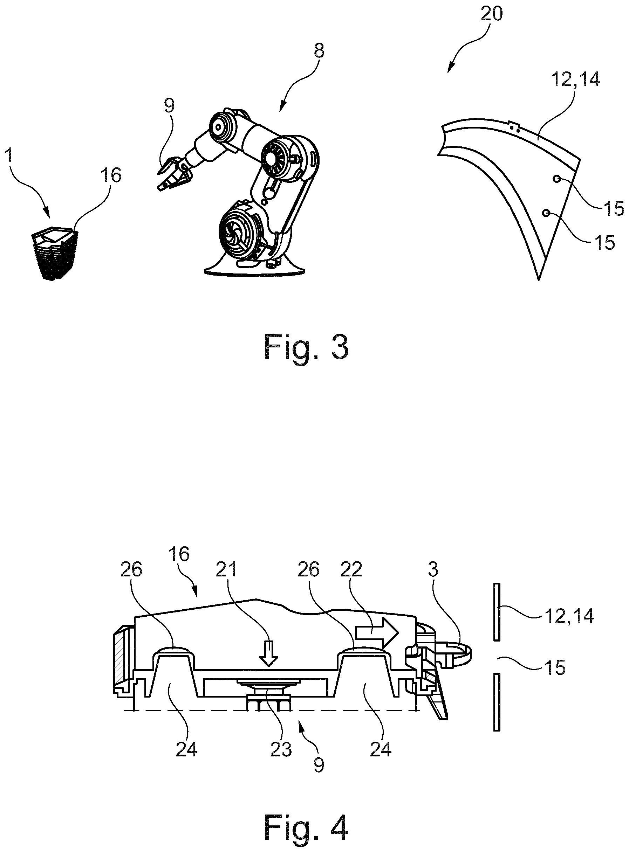

In Fig. 3 ist ein Systemen 20 zur Anbringung von Dämmelementen 16 an Strukturelementen 12, 14 schematisch dargestellt. In diesem Ausführungsbeispiel ist ein Stapel 1 mit Dämmelementen 16 bereitgestellt. Der Roboter 8, welcher als Mehrachs-Roboter mit einem Greifer 9 ausgebildet ist, bringt die einzelnen Dämmelemente 16 an einem Strukturelement 12, 14 an, welches in diesem Ausführungsbeispiel als einzelnes Blech ausgebildet ist.

In Fig. 4 ist nun beispielhaft und schematisch die Anbringung eines Dämmelementes 16 durch den Roboter an einem Strukturelement 12, 14 dargestellt. Dabei bewegt der Roboter das Dämmelement 16 in der Applikationsrichtung 22 derart gegen das Strukturelement 12, 14, dass das Fixierungselement 3 in die Öffnung 15 des Strukturelementes 12, 14 eingeführt wird und darin mechanisch arretiert. In diesem Ausführungsbeispiel bilden die Greifrichtung 21 und die Applikationsrichtung 22 im Wesentlichen einen Winkel von 90° bei der Anbringung des Dämmelementes 16 am Strukturelement 12, 14.
In diesem Ausführungsbeispiel umfasst der Greifer 9 einen Sauggreifer 23, welcher ein Dämmelement 16 in einer Greifrichtung 21 ansaugen kann. Zur besseren Fixierung des Dämmelementes 16 am Greifer 9 sind zudem verschiedene Eingriffselemente 24, 26 vorgesehen, welche ineinandergreifen und das Dämmelement 16 und den Greifer 9 gegen eine seitliche Verschiebung mechanisch arretieren.

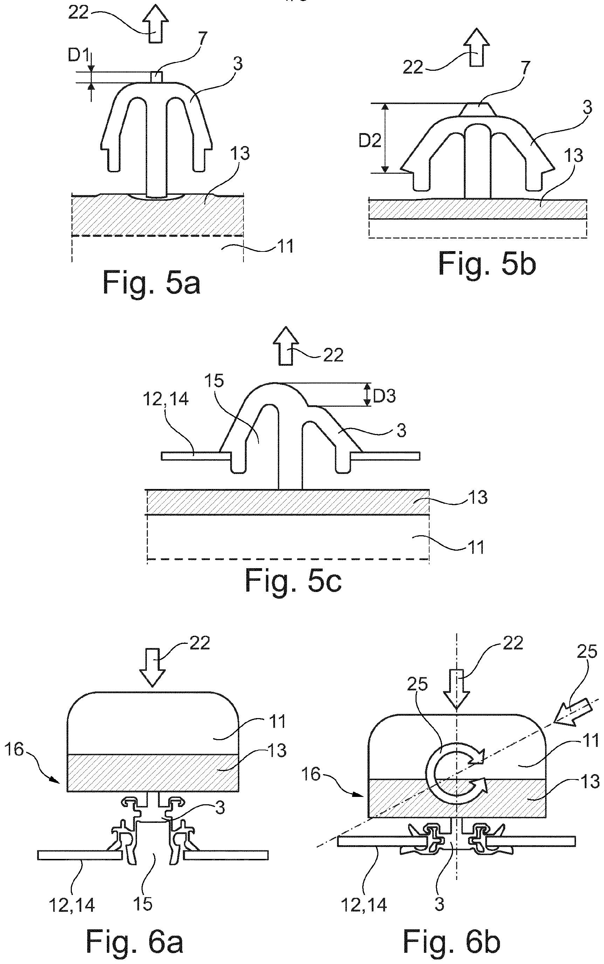

In den Fig. 5a bis 5c sind schematisch und beispielhaft verschiedene Ausführungsmöglichkeiten von Fixierungselementen 3 dargestellt. Das Fixierungselement 3 in den Fig. 5a und 5b umfasst jeweils ein Führungselement 7, welches an einem Ende des Fixierungselementes 3 in Applikationsrichtung angeordnet ist. Dabei ist eine Höhe des Führungselementes 7 in Applikationsrichtung 22 als D1 bezeichnet. Das Führungselement 7 in Fig. 5a ist zylinderförmig ausgestaltet, und das Führungselement 7 in Fig. 5b ist kegelförmig ausgestaltet. Natürlich sind viele weitere Formgebungen für das Führungselement 7 denkbar.

Eine Aufbauhöhe des Fixierungselementes 3, welche in einem angebrachten Zustand in Applikationsrichtung 22 über das Strukturelement 12, 14 hinausragt, ist in Fig. 5b mit D2 bezeichnet. Oftmals ist es vorteilhaft, eine solche Aufbauhöhe möglichst klein zu halten, weil die Platzverhältnisse in Karosserien eingeschränkt sind. Somit können vorzugsweise flache und eher breite Fixierungselemente 3 verwendet werden, wie dies in Fig. 5b dargestellt ist.

In Fig. 5c ist schematisch und beispielhaft ein asymmetrisches Fixierungselement 3 dargestellt. Dabei ist eine erste Hälfte des Fixierungselementes 3 um eine Höhe D3 in Applikationsrichtung 22 höher als eine zweite Hälfte des Fixierungselementes 3. Eine solche asymmetrische Ausformung mit einer Stufe kann ähnlich wie das Führungselement 7 aus den Fig. 5a und 5b dazu benutzt werden, den Einführungsvorgang des Fixierungselementes 3 in die Öffnung 15 des Strukturelementes zu vereinfachen.

In den Fig. 6a und 6b ist schematisch und beispielhaft ein Prüfvorgang bei der automatisierten Anbringung von Dämmelementen 16 an Strukturelementen 12, 14 dargestellt. In Fig. 6a wird das Fixierungselement 3 in die Öffnung 15 des Strukturelementes 12, 14 eingeführt. In diesem Ausführungsbeispiel ist das Fixierungselement 3 als eine Art Schnappverschluss ausgestaltet. Das Dämmelement 16 wird dabei vom Roboter in Applikationsrichtung 22 bewegt. In diesem Ausführungsbeispiel verläuft die Applikationsrichtung 22 im Wesentlichen in nur einer Richtung und senkrecht zu einer Oberfläche des Strukturelementes 12, 14 in einem Bereich der Öffnung 15. In einem alternativen und nicht dargestellten Ausführungsbeispiel kann die Applikationsrichtung 22 jedoch auch geneigt zu dieser Senkrechten, und/oder aus mehreren unterschiedlichen Richtungen, und/oder bogenförmig etc. erfolgen.

In der Fig. 6b ist eine Überprüfung der korrekten Anbringung des Dämmelementes 16 am Strukturelement 12, 14 schematisch dargestellt. Dabei belastet der Roboter das Dämmelement 16 in zumindest eine Prüfrichtung 25. Diese Prüfrichtung 25 kann beispielsweise in eine Richtung angewendet werden, welche zumindest 45° abgeneigt ist von der Applikationsrichtung 22, oder eine solche Prüfrichtung 25 kann zusätzlich oder alternativ auch als Rotationsbewegung ausgeführt werden, welche im Wesentlichen einer Rotation des Dämmelementes 16 um dessen eigene Achse entspricht.

Besonders vorteilhaft werden beim Überprüfen einer korrekten Anbringung des Dämmelementes 16 am Strukturelement 12, 14 Belastungen in zumindest zwei Prüfrichtungen 25 ausgeführt. Auf diese Weise kann eine korrekte Anbringung mit grosser Zuverlässigkeit sichergestellt werden.

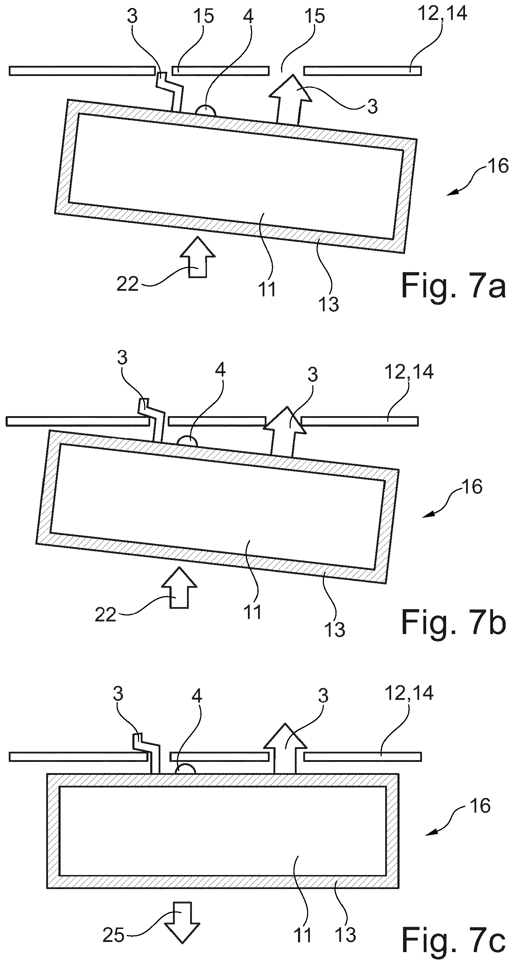

In den Fig. 7a bis 7c ist ein weiteres Beispiel einer automatisierten Anbringung eines Dämmelementes 16 an einem Strukturelement 12, 14 schematisch und beispielhaft dargestellt. Dabei wird das Dämmelement 16 zunächst am Strukturelement 12, 14 angebracht, indem zwei Fixierungselemente 3 jeweils in eine Öffnung 15 des Strukturelementes 12, 14 eingeführt und eingerastet werden. In diesem Ausführungsbeispiel ist eines der Fixierungselemente als Haken ausgebildet und ein zweites Fixierungselement 3 ist als Clip ausgebildet. Dabei umfasst das Dämmelement 16 zudem ein Distanzelement 4, welches bei erfolgter Anbringung für eine vorgesehene Distanz des Körpers des Dämmelementes 16 zum Strukturelement 12, 14 sorgt. Nach erfolgter Anbringung, welche in Applikationsrichtung 22 erfolgt, wird die Anbringung in einem Überprüfungsschritt geprüft. Dabei wird das Dämmelement 16 vom Roboter in Prüfrichtung 25 belastet, wobei in diesem Fall die Prüfrichtung 25 im Wesentlichen entgegen der Applikationsrichtung 22 erfolgt.

### Bezugszeichenliste

- 1: Stapel
- 2: Grundelement
- 3: Fixierungselement
- 4: Distanzelement
- 5: Stufe
- 6: Auflageelement
- 7: Führungselement
- 8: Roboter
- 9: Greifer
- 10: Karosserie
- 11: Träger
- 12: Strukturelement
- 13: expandierbares Material
- 14: Strukturelement
- 15: Öffnung
- 16: Dämmelement
- 17: Oberseite
- 18: Unterseite
- 19: Stapelrichtung
- 20: System
- 21: Greifrichtung
- 22: Applikationsrichtung
- 23: Sauggreifer
- 24: Eingriffselement
- 25: Prüfrichtung
- 26: Eingriffselement
- D1: Höhe des Führungselementes
- D2: Aufbauhöhe des Fixierungselementes
- D3: Höhenunterschied von asymmetrischem Fixierungselement

## Patentansprüche

1. Verfahren zur automatisierten Anbringung von Dämmelementen (16) an Strukturelementen (12, 14) von Kraftfahrzeugen, das Verfahren umfassend die Schritte:
Bereitstellen mehrerer Dämmelemente (16), wobei ein Dämmelement (16) jeweils einen Träger (11), ein expandierbares Material (13), welches auf dem Träger (11) angeordnet ist, und zumindest ein Fixierungselement (3) zur Fixierung des Dämmelementes (16) am Strukturelement (12, 14) umfasst;
Ergreifen einzelner Dämmelemente (16) durch einen Roboter (8), wobei der Roboter als Mehrachsenroboter mit einem Greifer (9) ausgebildet ist; und
Anbringen jeweils eines Dämmelementes (16) an einem Strukturelement (12, 14) durch den Roboter (8), wobei das zumindest eine Fixierungselement (3) des Dämmelementes (16) in eine Öffnung (15) des Strukturelementes (12, 14) eingeführt wird.

2. Verfahren nach Anspruch 1, wobei die Dämmelemente (16) beim Bereitstellen in einem Stapel (1) bereitgestellt werden, wobei alle übereinandergestapelten Dämmelemente (16) im Wesentlichen gleich im Raum ausgerichtet sind.

3. Verfahren nach einem der vorhergehenden Ansprüche, wobei der Roboter (8) beim Einführen des Fixierungselementes (3) in die Öffnung (15) das Dämmelement (16) in zumindest zwei unterschiedliche Applikationsrichtungen (22) bewegt.

4. Verfahren nach einem der vorhergehenden Ansprüche, wobei das Verfahren den weiteren Schritt umfasst:
Prüfen einer korrekten Anbringung des Dämmelementes (16) am Strukturelement (12, 14), indem der Roboter (8) das Dämmelement (16) in zumindest einer Prüfrichtung (25), welche um zumindest 45° abgeneigt ist von einer Applikationsrichtung (22), belastet, und/oder indem der Roboter (8) das Dämmelement (16) in zumindest einer Prüfrichtung (25), welche im Wesentlichen einer Rotationsrichtung des Dämmelementes (16) entspricht, belastet.

5. Verfahren nach Anspruch 4, wobei der Roboter (8) das Dämmelement (16) beim Prüfen in zumindest zwei unterschiedliche Prüfrichtungen (25) belastet.

6. Verfahren nach einem der Ansprüche 4 oder 5, wobei beim Prüfen eine Kraft von zumindest 5 N und/oder höchstens 200 N durch den Roboter (8) auf das angebrachte Dämmelement (16) beaufschlagt wird.

7. Verfahren nach einem der Ansprüche 4 bis 6, wobei das Verfahren den weiteren Schritt umfasst:
Aussortieren des Dämmelementes (16), falls das Dämmelement (16) beim Prüfen vom Strukturelement (12, 14) abgelöst wird.

8. Verfahren nach Anspruch 7, wobei das Verfahren den weiteren Schritt umfasst:
Unterbrechen des automatisierten Vorgangs, falls drei oder mehr Dämmelemente (16) aus zehn nacheinander angebrachten Dämmelementen (16) jeweils beim Prüfen vom Strukturelement (12, 14) abgelöst werden.

9. Verfahren nach einem der vorhergehenden Ansprüche, wobei der Roboter (8) beim Anbringen das Fixierungselement (3) mit einer Kraft von zumindest 70 N beaufschlagt.

10. Dämmelement (16) zur Abdämmung eines Strukturelementes (12, 14) in einem Kraftfahrzeug, das Dämmelement (16) umfassend:
einen Träger (11);
ein expandierbares Material (13), welches auf dem Träger (11) angeordnet ist; und
zumindest ein Fixierungselement (3) zur Fixierung des Dämmelementes (16) am Strukturelement (12, 14);
**dadurch gekennzeichnet, dass** das Dämmelement (16) für eine automatisierte Anbringung nach einem der Ansprüche 1 bis 9 ausgebildet ist.

11. Dämmelement (16) nach Anspruch 10, wobei das Fixierungselement (3) ein Führungselement (7) aufweist, welches als Fortsatz an einem Ende des Fixierungselementes (3) in einer vorgesehenen Applikationsrichtung (22) ausgebildet ist.

12. Dämmelement (16) nach Anspruch 11, wobei das Führungselement (7) eine Höhe (D1) in Applikationsrichtung (22) zwischen 0,5 und 5 mm aufweist.

13. Dämmelement (16) nach einem der Ansprüche 10 bis 12, wobei das Dämmelement (16) zumindest zwei Fixierungselemente (3) umfasst, und wobei zumindest eines dieser Fixierungselemente (3) als Befestigungsclip mit Schnappverschluss ausgebildet ist.

14. Dämmelement (16) nach einem der Ansprüche 10 bis 13, wobei eine Höhe (D2) des Fixierungselementes (3) in Applikationsrichtung (22), welche sich in einem angebrachten Zustand über das Strukturelement (12, 14) erhöht, höchstens 5 mm beträgt.

15. Dämmelement (16) nach einem der Ansprüche 10 bis 14, wobei das Fixierungselement (3) asymmetrisch ausgebildet ist, wobei eine erste Hälfte des Fixierungselementes (3) in Applikationsrichtung (22) um eine Höhe (D3) höher ausgebildet ist als eine zweite Hälfte des Fixierungselementes (3).
